Europäisches Patentamt

European Patent Office

Office européen des brevets

(11) Veröffentlichungsnummer: **0 290 745**
**B1**

(12) **EUROPÄISCHE PATENTSCHRIFT**

(45) Veröffentlichungstag der Patentschrift:
**18.07.90**

(51) Int. Cl.⁵: **B04B 1/04**, A61C 17/14

(21) Anmeldenummer: **88104030.7**

(22) Anmeldetag: **14.03.88**

(54) Vorrichtung zum Abscheiden von Feststoffen aus Flüssigkeiten in zahnärztlichen Einrichtungen.

(30) Priorität: **13.05.87 DE 3716008**
**27.07.87 DE 3724841**

(43) Veröffentlichungstag der Anmeldung:
**17.11.88 Patentblatt 88/46**

(45) Bekanntmachung des Hinweises auf die Patenterteilung:
**18.07.90 Patentblatt 90/29**

(84) Benannte Vertragsstaaten:
**DE FR GB IT SE**

(56) Entgegenhaltungen:
**WO-A-86/03669**
**CH-A- 238 684**
**CH-A- 395 865**
**FR-A- 1 380 872**
**GB-A- 1 507 742**
**US-A- 1 981 924**

(73) Patentinhaber: **Siemens Aktiengesellschaft,
Wittelsbacherplatz 2, D-8000 München 2(DE)**

(72) Erfinder: **Hohmann, Eugen, Dipl.-Ing.(FH), Am
Leimenberg 32, D-6140 Bensheim(DE)**
Erfinder: **Behringer, Wolfgang, Dipl.-Ing., Am
Flechtenberg 26, D-6140 Bensheim(DE)**
Erfinder: **Preuss, Manfred, Am Langenmarkstrasse 1,
D-6147 Lautertal(DE)**

## Beschreibung

Die Erfindung bezieht sich auf eine Vorrichtung zum Abscheiden von Feststoffen, insbesondere Amalgam, aus Flüssigkeiten in zahnärztlichen Einrichtungen, mit einer von einem Motor angetriebenen Zentrifuge, in die über einen Einlaßkanal die mit Feststoffen angereicherte Flüssigkeit eingeleitet wird, und in der infolge Zentrifugalkraft die Feststoffe an peripheren Zentrifugenwandungen zentrifugiert werden, während die Flüssigkeit durch Überlauf aus der Zentrifuge gepreßt und in einen Abflußkanal geleitet wird, und mit einem Sammelbehälter, in dem die zentrifugierten Feststoffe gesammelt und verwahrt werden.

Eine Vorrichtung dieser Art ist beispielsweise aus DE-A-35 21 929 bekannt.

Nachteilig bei dieser bekannten Vorrichtung ist, daß aufgrund Adhäsion Feststoffteilchen an der Innenfläche der Zentrifuge haften bleiben. Diese Haftung ist insbesondere bei sehr kleinen Partikeln (< 0,5 mm) gegeben und besteht auch dann noch, wenn die Zentrifuge zum Stillstand kommt. Um diese Partikel dennoch in den Sammelbehälter zu transportieren, wurde zwar eine Schnellabbremsung vorgesehen; wie praktische Versuche gezeigt haben, überwiegen die Adhäsionskräfte gegenüber den Abbremskräften, so daß nach wie vor noch größere Mengen dieser kleinen Partikel in der Zentrifuge verbleiben. Die bekannte Vorrichtung ist außerdem vergleichsweise aufwendig.

Der im Anspruch 1 angegebenen Erfindung liegt die Aufgabe zugrunde, demgegenüber eine Verbesserung zu erzielen.

Gemäß der Erfindung ist der Sammelbehälter für die Partikel Bestandteil des rotierenden Systems, bildet also mit der Rotorwelle eine kompakte, jedoch von dieser leicht trennbare Einheit. Der Sammelbehälter enthält mehrere, senkrecht zur Rotorachse angeordnete Trennwände, die übereinander angeordnete Kammern bilden. Das Verhältnis Durchmesser zur Höhe dieser Kammern beträgt wenigstens 5:1. Besonders vorteilhaft ist es, wenn konzentrisch zur Antriebswelle ein rohrförmiger Einlaufstutzen für die Flüssigkeit angeordnet ist und dieser möglichst tief, mindestens bis in das untere Drittel des Sammelbehälters, eintaucht, wozu die Trennwände entsprechend große, auch den Durchtritt der Flüssigkeit gewährleistende, konzentrische Öffnungen aufweisen. Der Sammelbehälter ist zweckmäßigerweise als Einwegbehälter ausgebildet und besteht aus umweltfreundlichem Werkstoff, z.B. aus Polypropylen oder Polysulfon. Gemäß einer vorteilhaften Weiterbildung der Erfindung ist der Antriebsmotor für die Zentrifuge gleichsam als Antriebsmotor für eine die Flüssigkeit in den Sammelbehälter drückende Pumpe vorgesehen. Letztere ist vorteilhaft im Oberteil der Zentrifuge integriert angeordnet. Das gesamte Antriebssystem ist schwingungsarm aufgehängt. Vorteilhafterweise ist hierzu die Antriebswelle quergeteilt und der den Sammelbehälter in Rotation versetzende Wellenabschnitt elastisch gelagert, wobei das eine, dem Sammelbehälter zugewandte, Lager von einem den Sammelbehälter umgebenden, becherförmigen Gehäuseunterteil aufgenommen wird. Der Füllgrad des Sammelbehälters wird vorteilhafterweise durch Messen der Anlaufzeit des Motors überwacht, wozu entsprechende, die Anlaufzeit messende Sensorelemente vorhanden sind, welche bei Überschreiten einer bestimmten, der maximalen Füllmenge des Behälters zugeordneten Anlaufzeit ein Signal für eine optische und/oder akustische Anzeige liefern.

Weitere vorteilhafte Ausgestaltungen und Weiterbildungen der Erfindung ergeben sich aus der nachfolgenden Beschreibung mehrerer Ausführungsbeispiele der Erfindung anhand der Zeichnung.

Es zeigen:

Figur 1 eine erste Ausführungsform der Erfindung,

Figur 2 eine zweite Ausführungsform der Erfindung,

Figuren 3 und 4 Ausschnitte aus Figur 2,

Figuren 5 bis 10 eine weitere Ausführungsform eines Sammelbehälters.

An der Oberseite eines topfförmigen Gehäuseteils 1 ist ein Antriebsmotor (Elektromotor) 2 mit lotrechter Antriebswelle 3 befestigt. Die Antriebswelle 3 ist quergeteilt, wobei die beiden durch Querteilung gebildeten Wellenabschnitte 3a, 3b durch eine Kupplung 4 miteinander verbunden sind. Am unteren Wellenabschnitt 3b ist ein als Zentrifuge dienender rotationssymmetrischer Sammelbehälter 5 drehfest, aber axial lösbar angeordnet. Der Sammelbehälter 5 weist mittig eine Nabe 6 auf, die es erlaubt, den Behälter auf den unteren Wellenabschnitt 3b axial aufzuschieben. Im oberen Teil ist die Nabe 6 mit einem Schlitz 7 versehen, in dem ein quer zur Längssymmetrieachse verlaufender Mitnehmerstift 8 eingreift. Im aufgeschobenen Zustand kann der Sammelbehälter 5 mittels eines Feststellringes 9 axial fixiert werden. Das freie Ende 10 des Wellenabschnittes 3b ist in einem Lager 11 (DU-Buchse) geführt, welches mit Hilfe elastischer Mittel 12 (GI-Metall-Buchse) in einem den Sammelbehälter umgebenden unteren Gehäuseteil 13 befestigt ist. Das untere Gehäuseteil 13 ist mittels leicht lösbarer Schraubelemente 14 am oberen Gehäuseteil 1 befestigt. Das obere Ende des Wellenabschnittes 3b ist im Bereich der Kupplung 4 mit Hilfe weiterer elastischer Mittel 15 ebenfalls schwingungsarm gelagert. Diese stützen sich einerseits am oberen Gehäuseteil 1 und andererseits an einem Trägerteil 16 für ein weiteres Wellenlager 17 ab.

Mit 18 ist ein Einlaufkanal bezeichnet, der in bekannter Weise mit dem saugseitigen Teil einer Absaugeinrichtung verbunden ist und über den mit Feststoff-, wie Amalgam-, Gold- etc. -partikel angereicherte Flüssigkeit in einen ringförmigen Verteilerraum 19 eintreten kann. Vom Verteilerraum 19 aus führt ein den Wellenabschnitt 3b konzentrisch umgebender Rohrstutzen 20 bis etwa in Bodennähe des Sammelbehälters 5, mindestens jedoch bis in das untere Drittel des Behälters.

Der Sammelbehälter 5 weist eine Vielzahl von quer zur Symmetrieachse verlaufenden Trennwänden 21 auf, die eine Vielzahl von Kammern 22 bilden, welche durch konzentrisch zur Nabe 6 und zum Rohrstutzen 20 angeordnete Öffnungen 23 sowohl untereinander als auch mit der Behälteröffnung 24 verbunden sind. Die Öffnungen 22 sind größer als der äußere Durchmesser des Rohrstutzens 20 und so bemessen, daß die über den Einlaufkanal 16 und den Rohrstutzen in die Behälter eingeführte Flüssigkeit ohne Rückstau über die Behälteröffnung 24 in den Auslaßkanal 25 fließen kann. Damit die Flüssigkeit nicht in das untere Gehäuseteil 13 eindringen kann, ist der Behälter 5 oben mit einem die Oberkante des Gehäuseteils 3 übergreifenden Rand 26 versehen.

Die Trennwände 21 und die durch sie gebildeten Kammern 22 dienen dazu, die mitgeführten Feststoffpartikel, welche während der Rotation des Behälters infolge Zentrifugalkraft gegen die peripheren Wandungen 27 des Behälters gedrückt werden, gleichmäßig verteilt aufzufangen. Wie Versuche gezeigt haben, läßt sich so eine unwuchtarme Ablagerung der zum Teil spezifisch relativ schweren (Amalgam-)Feststoffpartikel erzielen. Im Laufe der Benutzung füllen sich die Kammern gleichmäßig von unten nach oben. Je nach Behältergröße sind wenigstens drei solcher Kammern notwendig, vorteilhafterweise jedoch etwa 10 bis 12 bei einem Behältervolumen von 700 ml. Das Verhältnis Trennwand - Durchmesser zu Höhe einer Kammer beträgt mindestens 5:1.

Die über den Rohrstutzen 20 mit Feststoffen durchsetzte Flüssigkeit wird infolge des relativ tiefen Eintauchens des Stutzens in den Behälter 5 praktisch in Nähe des Behälterbodens eingeleitet. Bei Rotation des Behälters (Drehzahl etwa 2.500 bis 3.000 Upm), werden die Feststoffpartikel gleichmäßig auf die Kammern 22 verteilt an den peripheren Wandungen 27 des Behälters zentrifugiert, während die Flüssigkeit über die Öffnungen 23 und die Behälteröffnung 24 nach oben in den Auslaßkanal 25 gedrückt wird. Sobald ein bestimmter Füllungsgrad der Feststoffpartikel erreicht ist, wird ein optisches und/oder akustisches Signal als Hinweis zum Auswechseln des Behälters gegeben. Hierzu kann vorteilhafterweise die Anlaufzeit des Motors gemessen bzw. kontrolliert werden, z.b. indem im oberen Wellenabschnitt 3a und an mit diesem korrespondierenden festen Gehäuseteil eine Lichtschrankenanordnung 28 angebracht ist, mit deren Hilfe die Anlaufzeit des Motors bis Erreichen der Nenndrehzahl, welche letztlich vom Trägheitsmoment und damit vom Füllstand des Behälters abhängig ist, gemessen werden kann. Bei Überschreiten eines vorbestimmten, einer bestimmten Füllmenge des Behälters zugeordneten Anlaufzeit kann so ein optisches und/oder akustisches Signal abgegeben und gegebenenfalls auch der Motor abgeschaltet werden.

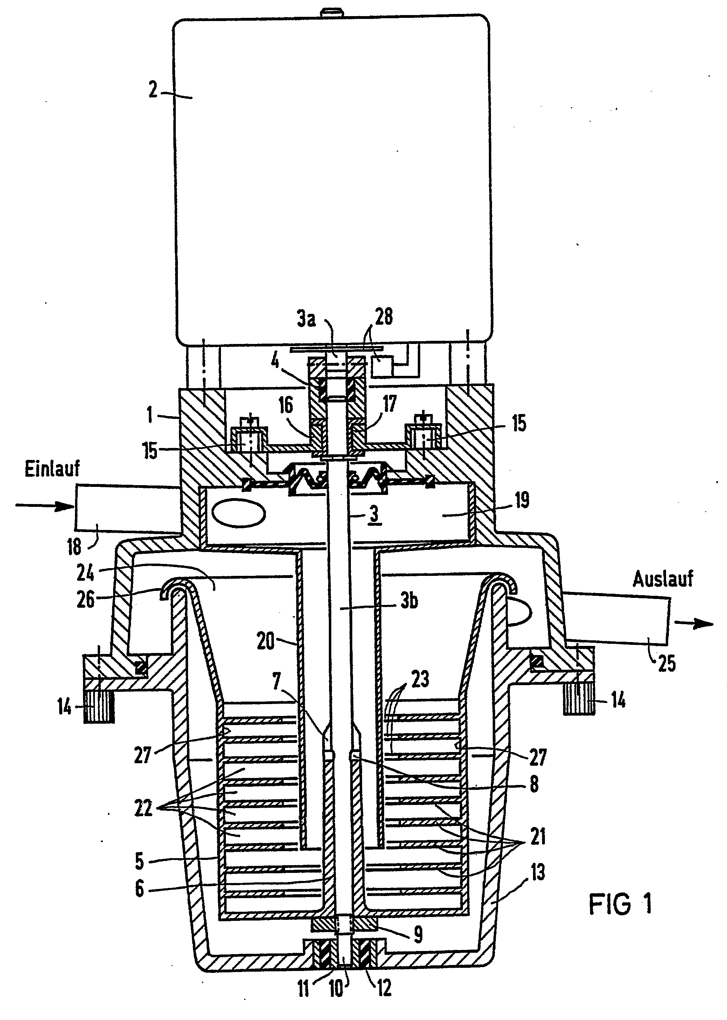

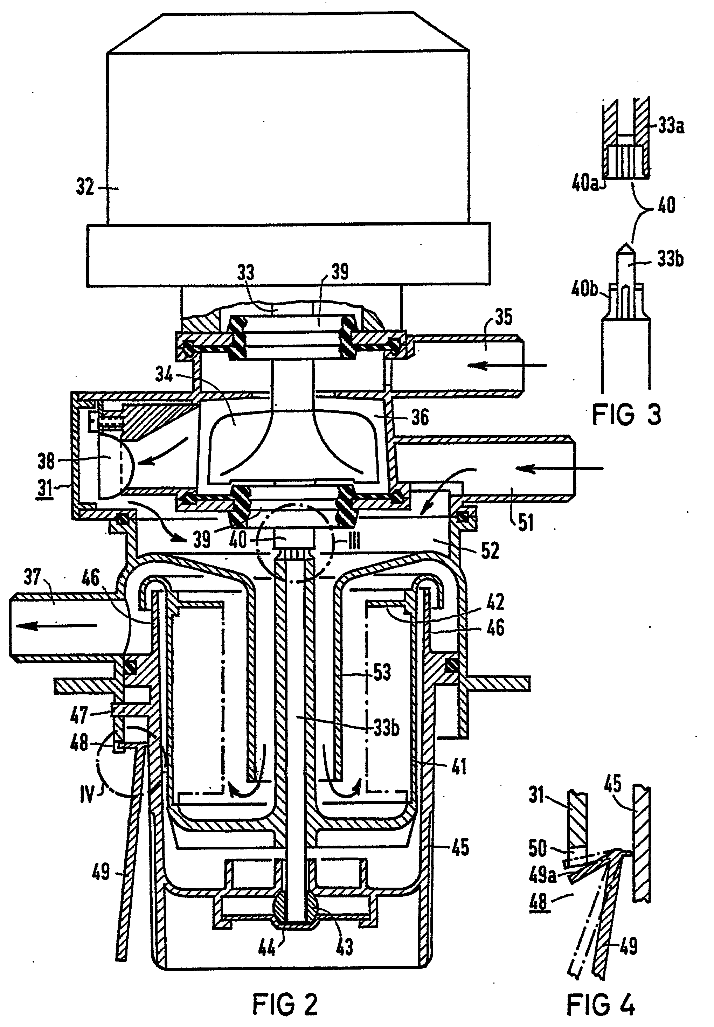

Die Fig. 2 zeigt, ebenfalls im Längsschnitt, eine zweite Ausführungsform einer Abscheidevorrichtung nach der Erfindung. Auch bei dieser Ausführungsform ist an der Oberseite eines Gehäuseteils 31 ein Antriebsmotor 32 befestigt; im Gegensatz zu der Ausführungsform nach Fig. 1 treibt der Antriebsmotor nicht nur die Zentrifuge, sondern auch eine auf der Motorwelle 33 aufgesetzte Pumpe 34 an. Mit der Pumpe 34 wird die von einer Absauganlage aus dem Patientenmund abgesaugte und in einer Separiereinrichtung von Luft getrennte Flüssigkeit (siehe hierzu europäisches Patent 00 23 036) über einen Einlaßkanal 35 in das Pumpengehäuse 36 geleitet, dann mit Druck in die Zentrifuge und anschließend über den Auslaßkanal 37 in den Abfluß geleitet. Am Ausgang des Pumpengehäuses 36 befindet sich ein Rückschlagventil 38. Das Rückschlagventil 38 ist ein halbkugelförmiges Kunststoffteil, welches im Pumpengehäuse scharnierartig beweglich befestigt ist. Mit 39 sind Dichtungen bezeichnet, mit denen die Motorwelle 33 gegenüber dem Pumpengehäuse abgedichtet ist.

Die Motorwelle 33 ist im Bereich des strichpunktiert eingezeichneten Kreises III quergeteilt und enthält dort eine in Fig. 3 im auseinandergezogenen Zustand gezeigte Steckkupplung 40 in Form von zueinander passenden Mehrkantprofilteilen 40a, 40b, die einerseits eine Drehmomentübertragung und andererseits ein leichtes An- und Abkuppeln der Teile ermöglichen. Der untere Wellenabschnitt 33b ist Bestandteil des Sammelbehälters 41, der ähnlich aufgebaut ist wie der Sammelbehälter 5 in Fig. 1 und ebenfalls eine Vielzahl von quer zur Symmetrieachse verlaufenden Trennwänden 42 aufweist, von denen der besseren Übersichtlichkeit wegen in dieser Ausführungsform nur eine einzige eingezeichnet ist. Nachdem, wie bereits bei der ersten Ausführungsform erwähnt, der Sammelbehälter vorteilhafterweise aus Kunststoff besteht und zweckmäßigerweise als Einmalartikel ausgebildet ist, ist es vorteilhaft, den unteren Wellenabschnitt 33b und das eine Kupplungsteil 40b der Kupplung 40 zusammen mit dem Sammelbehälter 41 als ein Spritzteil auszubilden.

Das untere Ende des Wellenabschnitts 33b ist in einem kugelförmig ausgebildeten Gleitlager 43 gelagert, welches mit Hilfe einer Spannfeder 44 im Gehäuseunterteil 45 so gehaltert ist, daß der Sammelbehälter 41 zusammen mit dem Wellenabschnitt 33b leicht aus der Lagerung entnehmbar und wieder in diese einführbar ist. Das Gehäuseunterteil 45 bildet mit Gehäusewandungen 46 vorteilhafterweise einen Teil des Auslaßkanales 37 und ist mittels eines mit 47 bezeichneten Bajonettverschlusses am oberen Gehäuseteil 31 befestigbar. Eine Rasteinrichtung 48, die in Fig. 4 im Detail dargestellt ist, sorgt für eine verdrehsichere Halterung des Gehäuseunterteils 45 in der Schließstellung des Bajonettverschlusses. Die Rastung besteht aus einem scharnierartig am Gehäuseunterteil 45 angeordneten Kipphebel 49, dessen kurzer Schenkel 49a in eine Kerbe 50 des oberen Gehäuseteils 31 rastend eingreift (strichpunktierte Darstellung).

Im Gegensatz zu der Ausführungsform nach Fig. 1 ist bei der Ausführungsform nach Fig. 2 außer dem Einlaßkanal 35 mindestens noch ein weiterer Einlaßkanal 51 vorgesehen, der beispielsweise in bekannter Weise mit dem Abfluß einer Speischalenanordnung oder mit dem Abfluß einer Wasserstrahlpumpe eines zahnärztlichen Gerätes verbunden ist und in einen Verteilerraum 52 mündet, in den auch die aus dem Pumpengehäuse kommende Flüssigkeit geleitet wird. An den Verteilerraum 52 schließt sich, wie beim Ausführungsbeispiel nach Figur 1, ein bis in Bodennähe des Sammelbehälters 41 reichender Rohrstutzen 53 an.

Dadurch, daß die Pumpe integriert im oberen Gehäuseteil angeordnet ist, und nur ein Antriebsmotor für Pumpe und Zentrifuge benötigt wird, läßt sich eine sehr kompakte und wirtschaftliche Abscheideeinrichtung erzielen.

Selbstverständlich können auch bei der in Fig. 2 gezeigten Anordnung die bereits zu der Ausführungsform nach Fig. 1 beschriebenen Maßnahmen zur Füllstandsmessung des Sammelbehälters mit Vorteil eingesetzt werden.

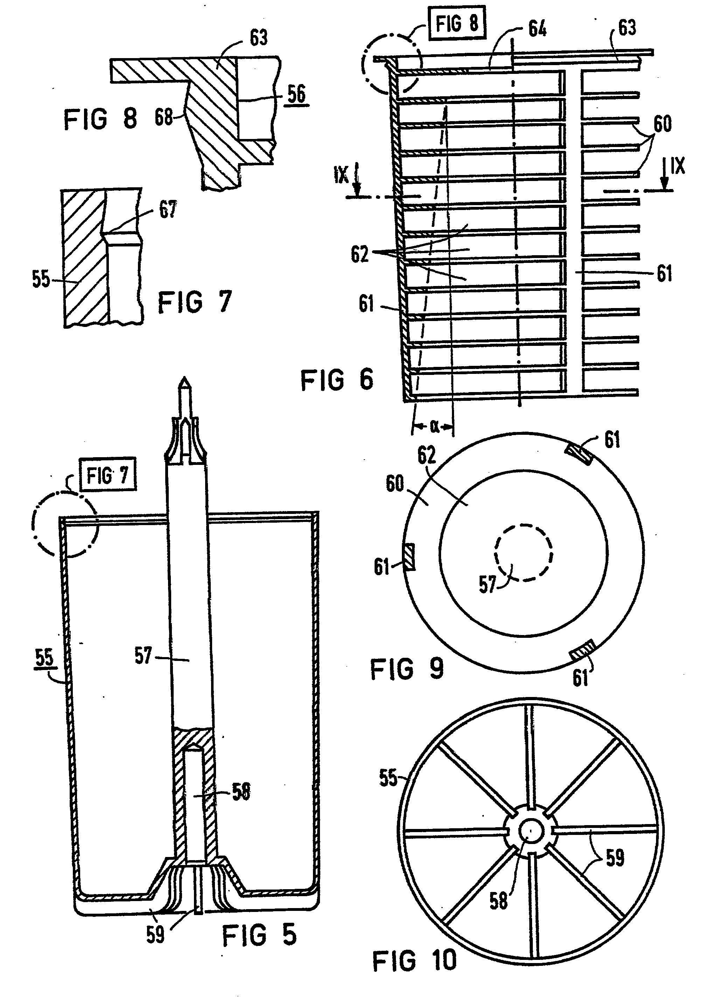

Die Figuren 5 bis 10 zeigen in verschiedenen Ansichten und teilweise im Schnitt Einzelheiten einer weiteren Ausführungsform eines Sammelbehälters. Im Gegensatz zu den Ausführungsformen nach Figuren 1 und 2, bei denen der Sammelbehälter (Pos. 5, 41) als einteiliger Behälter ausgebildet ist, besteht bei der nachfolgend näher erläuterten Ausführungsform der Sammelbehälter aus zwei Teilen, einem becherförmigen, nach oben offenen und im wesentlichen zylindrische Behälterinnenwandungen aufweisenden Behälterteil 55 (Figur 5) und einem in diesen rastend einsetzbaren Einsatzteil 56 (Figur 6). Der Behälterteil 55 weist, wie beim Ausführungsbeispiel nach Figur 2, eine angespritzte Nabe 57 auf, die, wie in Figur 3 gezeigt, mit der Antriebswelle des Motors drehfest, axial jedoch leicht lösbar kuppelbar ist. Die Nabe 58 weist eine Bohrung 58 auf, in die ein nicht gezeigter Wellenstumpf einsetzbar ist, der, wie in Figur 2 gezeigt, in ein entsprechend ausgebildetes Kalottenlager (Position 43 in Fig. 2) eingreift. Der Behälterteil 55 weist bodenseitig außen mehrere sternförmig von der Symmetrieachse verlaufende Stege bzw. Flügel 59 auf, die bei Rotation des Behälters in dem darunter befindlichen Raum einen Überdruck erzeugen, der verhindert, daß Flüssigkeit in diesen Raum eindringen kann bzw. evtl. darin befindliche Flüssigkeit nach oben in den Abfluß wegdrückt. Die Anordnung der Flügel 59 ist aus Figur 10 ersichtlich, die das Behälterteil 55 von der Unterseite her zeigt.

Das Einsatzteil 56, welches in Figur 6 rechts von der Symmetrieachse in der Ansicht und links davon im Längsschnitt gezeigt ist, besteht aus einer Vielzahl von in gleichmäßigem Abstand voneinander angeordneten Trennwänden 60, die durch drei am Umfang angeordnete Längsstege 61 und einem den oberen Rand bildenden Deckel 62 miteinander verbunden sind. Die Trennwände 60 sind kreisringförmig ausgebildet, haben jeweils gleichen Außendurchmesser, jedoch verschiedenen Innendurchmesser, und zwar von unten nach oben betrachtet einen kontinuierlich kleiner werdenden Durchmesser. Hieraus ergibt sich im montierten Zustand, daß die zwischen der Nabe 57 (in Fig. 9 gestrichelt eingezeichnet) und den Innenkanten der Trennwände 60 gebildeten Öffnungen 62 (in Figur 1 mit 23 bezeichnet) in Bodennähe des Behälters am größten und zum oberen Rand hin stetig kleiner werdend sind. Die im Deckel 63 vorhandene Öffnung 64 ist kleiner als die vorgenannten Öffnungen 62, die sich aus der kontinuierlichen Verkleinerung des Innendurchmessers der Trennwände bis zum Deckel ergeben. Diese deutlich kleinere Öffnung 64 bestimmt durch die an dieser Stelle herrschende Umfangsgeschwindigkeit bei Rotation letztlich den Abscheidegrad der abzuscheidenden Partikel. Der sich vom Behälterboden bis zum Behälterrand kontinuierlich verkleinernde Innendurchmesser der Trennwände 60 liegt vorteilhafterweise bei einer Winkelabweichung ($\alpha$) von etwa 5° von der Vertikalen.

Das Einsatzteil 56 ist, wie bereits erwähnt, im Behälterteil 55 rastend einsetzbar, wozu, wie in Figuren 7 und 8 als Einzelheit dargestellt, das Behälterteil 55 im Bereich der Oberkante eine ringförmige Einschnürung 67 enthält, in die bei Aufsetzen des Einsatzteils auf den Behälterteil 55 eine ebenfalls ringförmige Ausbauchung 68 am Deckel 62 des Einsatzteils 56 formschlüssig im Sinne einer Klemmverbindung eingreift.

Wenngleich auch bei dieser, wie bei den zuvor beschriebenen, Ausführungsformen der gesamte Sammelbehälter als einmal verwendbarer Behälter vorgesehen ist, so hat die zweiteilige Ausführung den Vorteil, daß das mit den zentrifugierten Partikeln behaftete Einsatzteil 56 erheblich weniger Behältermaterial (Kunststoff) enthält als bei einer einteiligen Ausführung, so daß die Entsorgung und Wiederaufbereitung der Behälter weniger problematisch ist als bei einer einteiligen Ausführung.

Mit der beschriebenen Abscheideeinrichtung läßt sich ein sehr hohes Abscheidegrad erzielen der, je nach Größe der Partikel, bei 98 % liegen kann. Bei Abscheidung von Feststoffteilchen einer Korngröße von 100$\mu$ wird noch ein Abscheidegrad von über 95 % erzielt, bei einem Volumenstrom von etwa 700 ml/min Flüssigkeitsdurchsatz. Je nach Anzahl und Abmessungen der einzelnen Kammern kann der Sammelbehälter mehrere hundert Gramm Amalgam aufnehmen. Bei gefüllten Kammern wird der Behälter ausgetauscht und zur weiteren Entsorgung einer Abscheideanstalt zugeführt.

Obwohl es zweckmäßig und vorteilhaft ist, die Behälteranordnung unterhalb des Motors vorzusehen, ist auch eine umgekehrte Anordnung denkbar, bei der der Motor unten und darüber der Sammelbehälter angeordnet sind.

## Patentansprüche

1. Vorrichtung zum Abscheiden von Feststoffen aus Flüssigkeiten in zahnärztlichen Einrichtungen, mit einer von einem Motor (1, 36) angetriebenen Zentrifuge, in die über einen Einlaßkanal (18, 36) die mit Feststoffen angereicherte Flüssigkeit eingeleitet wird, und in der infolge Zentrifugalkraft die Feststoffe an peripheren Zentrifugenwandungen zentrifugiert werden, während die Flüssigkeit durch Überlauf aus der Zentrifuge gepreßt und in einen Abflußkanal (25, 37) geleitet wird, und mit einem Sammelbehälter (5, 4) in dem die zentrifugierten Feststoffe gesammelt und verwahrt werden, dadurch gekennzeichnet, daß der Sammelbehälter (5, 41; 55) Bestandteil des rotierenden Teils der Zentrifuge ist, indem die Behälterwandungen (27) die Zentrifugenwandungen bilden, daß der Sammelbehälter mehrere, senkrecht zur Rotationssymmetrieachse angeordnete Kammern (22) aufweist, die durch quer zur Rotations-Symmetrieachse verlaufende Trennwände (21, 42, 60) gebildet sind, welche über achsparallele Öffnungen (23, 62, 64) sowohl miteinander als auch mit dem Abflußkanal (25, 37) verbunden sind, und daß der Sammelbehälter drehfest, aber axial trennbar mit der Antriebsachse (3, 33) des Motors (1, 32) verbunden ist.

2. Vorrichtung nach Anspruch 1, dadurch gekennzeichnet, daß die Öffnungen (23, 62, 64) konzentrisch zu einer Nabe (6, 57) des Sammelbehälters (5, 41, 55) angeordnet sind, die auf die Antriebswelle (3, 33) drehfest aufsetzbar ist.

3. Vorrichtung nach Anspruch 2, dadurch gekennnet, daß die Nabe (6, 57) des Sammelbehälters (5, 41, 55) im montiertenn Zustand an einem Anschlag (8) der Antriebswelle (3, 33) anliegt und mittels Feststellmittel (9) axial gehalten wird und daß das dem Sammelbehälter (5) zugewandte Wellenende (10) der Antriebswelle (3) in einem Lager (11, 43) geführt ist, welches in einem den Sammelbehälter (5, 41) umgebenden Gehäuseteil (13, 45) angeordnet ist.

4. Vorrichtung nach Anspruch 3, dadurch gekennzeichnet, daß das den Sammelbehälter (5, 41, 55) umgebende Gehäuseteil (13, 45) das Unterteil und der Antriebsmotor (1, 32) und das den Ein- und Auslaßkanal (18, 25; 36, 37) und einen Verteilerraum (19) enthaltende Gehäuseteil (1, 31) das Oberteil der Vorrichtung bilden.

5. Vorrichtung nach Anspruch 4, dadurch gekennzeichnet, daß von dem mit dem Einlaßkanal (18, 36) verbundenen Verteilerraum (19, 52) ein die Antriebswelle (3, 33) konzentrisch umgebender Rohrstutzen (20, 53) bis in Bodennähe des Sammelbehälters (5, 41, 55) eintaucht und daß die Öffnungen (23, 62, 64) der Kammern (22) so groß gewählt sind, daß ein rückstaufreier Durchtritt der Flüssigkeit zwischen Rohrstutzen (20, 53) und den Trennwänden (21, 42, 60) gegeben ist.

6. Vorrichtung nach Anspruch 1, dadurch gekenzeichnet, daß Mittel (28) vorhanden sind, welche den Füllgrad des Sammelbehälters (5, 41) erfassen und bei Erreichen einer bestimmten Menge an Feststoffen ein optisches und/oder akustisches Signal geben.

7. Vorrichtung nach Anspruch 6, dadurch gekennzeichnet,, daß zur Bestimmung des Füllgrades die Anlaufzeit des Antriebsmotors (1, 32), erfaßt wird.

8. Vorrichtung nach Anspruch 7, dadurch gekennzeichnet, daß an der Motorwelle (3, 33) und an demgegenüber feststehenden Gehäuseteilen eine Lichtschrankenanordnung (28) zur Erfassung der Anlaufzeit des Antriebsmotors (1, 32) vorhanden ist.

9. Vorrichtung nach Anspruch 1, dadurch gekennzeichnet, daß der Motor (32) für die Zentrifuge gleichsam Antriebsmotor für eine die Flüssigkeit in den Sammelbehälter (41) drückende, im Oberteil (31) integriert angeordnete Pumpe (34) ist.

10. Vorrichtung nach Anspruch 9, dadurch gekennzeichnet, daß das Oberteil (31) einen ersten Einlaufkanal (36) für Flüssigkeit aufweist, der einerseits in bekannter Weise mit der Abflußleitung einer Saugeinrichtung und andererseits mit dem Pumpengehäuse (36) verbunden ist, daß druckseitig der Pumpe (34) ein Rückschlagventil (38) angeordnet ist, daß im Anschluß an das Rückschlagventil (38) wenigstens ein weiterer Einlaufkanal (51) für Flüssigkeit vorgesehen ist, und daß beide Einlaufkanäle (36,51) in einen Verteilerraum (52) münden, an sich ein die Antriebswelle (33b) des Sammelbehälters (41) konzentrisch umgebender, bis in Bodennähe des Sammelbehälters (41) eintauchender Rohrstutzen (53) anschließt.

11. Vorrichtung nach Anspruch 1, dadurch gekennzeichnet, daß die Trennwände (60) Bestandteil eines in den Sammelbehälter (55) einsetzbaren und mit diesem lösbar verbindbaren Einsatzteils (56) sind.

12. Vorrichtung nach Anspruch 11, dadurch gekennzeichnet, daß ein im wesentlichen zylindrischer Behälterteil (55) mit im gleichmäßigen Abstand zueinander angeordneten, bis zu seinem oberen Rand reichenden Trennwänden (60) vorgesehen ist, deren Innenkanten unterschiedlich große Öffnungen (62, 64) bilden.

13. Vorrichtung nach Anspruch 12, dadurch gekennzeichnet, daß die Öffnungen (62, 64) vom Boden bis zum oberen Ende des Behälterteils (55) kontinuierlich kleiner werdend ausgeführt sind.

14. Vorrichtung nach Anspruch 11, dadurch gekennzeichnet, daß das Einsatzteil (56) einen den oberen Rand des Behälterteils (55) bildenden Deckel (63) enthält, der eine Austrittsöffnung (64) aufweist, die kleiner ist als diejenige Öffnung (62), welche sich aus der Kontinuität der kleiner werdenden Öffnungen (62) an dieser Stelle ergeben würde.

15. Vorrichtung nach Anspruch 11, dadurch gekennzeich net, daß der Behälterteil (55) bodenseitig außen mehrere zur Rotationsachse sternförmig angeordnete Flügel (59) aufweist, welche bei Rotation unterhalb des Behälters einen Überdruck erzeugen.

**Claims**

1. Device for separating solids from liquids in dental equipment, comprising a centrifuge driven by a motor (1, 36) into which the liquid enriched with solids is introduced via an inlet duct (18, 36), and in which as a result of centrifugal force the solids are centrifuged against the peripheral walls of the centrifuge, whilst the liquid is forced out of the centrifuge by overflow and is fed into an outlet duct (25, 37), and comprising a collecting vessel (5, 4) in which the centrifuged solids are collected and kept, characterised in that the collecting vessel (5, 41; 55) is a component of the rotating part of the centrifuge with the vessel walls (27) forming the centrifuge walls, in that the collecting vessel has several chambers (22) arranged perpendicularly to the axis of rotational symmetry, these chambers being formed by partitions (21, 42, 60) which extend transversely to the axis of rotational symmetry and are connected both to one another and to the outflow duct (25, 37) via axially parallel openings (23, 62, 64), and in that the collecting vessel is connected to the drive shaft (3, 33) of the motor (1, 32) so as to be torsionally rigid but detachable axially.

2. Device according to claim 1, characterised in that the openings (23, 62, 64) are arranged so as to be concentric relative to a hub (6, 57) of the collecting vessel (5, 41, 55), said hub being mountable, so as to be torsionally rigid, on the drive shaft (3, 33).

3. Device according to claim 2, characterised in that, in the mounted state, the hub (6, 57) of the collecting vessel (5, 41, 55) lies against a stop (8) of the drive shaft (3, 33) and is held axially by locking means (9) and in that the shaft end (10) of the drive shaft (3) which faces towards the collecting vessel (5) is guided in a bearing (11, 43) arranged in a housing part (13, 45) that surrounds the collecting vessel (5, 41).

4. Device according to claim 3, characterised in that the housing part (13, 45) surrounding the collecting vessel (5, 41, 55) forms the lower part of the device and the drive motor (1, 32) and the housing part (1, 31) containing the inlet and outlet duct (18, 25; 36, 37) and a distributor space (19) forms the upper part of the device.

5. Device according to claim 4, characterised in that, from the distributor space (19, 52) connected to the inlet duct (18, 36), a pipe connection (20, 53) surrounding the drive shaft (3, 33) concentrically extends into the collecting vessel (5, 41, 55) almost as far as its base, and in that the size of the openings (23, 62, 64) of the chambers (22) is selected such as to allow the passage, free of back-pressure, of the liquid between the pipe connection (20, 53) and the partitions (21, 42, 60).

6. Device according to claim 1, characterised in that there are means (28) available which detect the degree to which the collecting vessel (5, 41) is filled and which, when a specific quantity of solids is reached, give an optical or acoustic signal.

7. Device according to claim 6, characterised in that the start-up time of the drive motor (1, 32) is detected in order to determine the degree of filling.

8. Device according to claim 7, characterised in that on the motor shaft (3, 33) and on housing parts which are stationary in relation to it there is a light barrier arrangement (28) for detecting the start-up time of the drive motor (1, 32).

9. Device according to claim 1, characterised in that the motor (32) for the centrifuge is, as it were, the drive motor for a pump (34) which forces the liquid into the collecting vessel (41) and which is arranged as an integral part in the upper part (31).

10. Device according to claim 9, characterised in that the upper part (31) has a first inlet duct (36) for liquid which is connected in the known manner to the outlet line of a suction device, on the one hand, and to the pump housing (36) on the other hand, in that a non-return valve (38) is disposed on the pressure side of the pump (34), in that at least one further inlet duct (51) for liquid is provided in connection with the non-return valve (38), and in that both inlet ducts (36, 51 ) open into a distributor space (52) to which is connected a pipe connection (53) surrounding the drive shaft (33b) of the collecting vessel (41) concentrically and extending into the collecting vessel (41) almost as far as its base.

11. Device according to claim 1, characterised in that the partitions (60) are a component part of an insert part (56) which may be inserted in the collecting vessel (55) and connected detachably thereto.

12. Device according to claim 11, characterised in that an essentially cylindrical vessel part (55) is provided with partitions (60) arranged evenly spaced apart from one another and extending up to its upper edge, the inside edges of said partitions forming openings (62, 64) of different sizes.

13. Device according to claim 12, characterised in that the openings (62, 64) are designed to become progressively smaller from the base to the upper end of the vessel part (55).

14. Device according to claim 11, characterised in that the insert part (56) contains a cover (63) which forms the top edge of the vessel part (55) and which has an outlet opening (64) which is smaller than the opening (62') which would be produced at this point from the progressive decrease in size of the openings (62).

15. Device according to claim 11, characterised in that, on the outside of its base, the vessel part (55) has several blades (59) arranged in the shape of a star relative to the axis of rotation, which blades generate an increased pressure beneath the vessel during rotation.

**Revendications**

1. Dispositif pour séparer les matières solides des liquides dans des appareils de dentisterie, comprenant une centrifugeuse qui est entraînée par un moteur (1, 36), dans laquelle le liquide enrichi en matières solides est envoyé par un canal d'entrée (18, 36) et dans laquelle, en raison de la force centrifuge, les matières solides sont centrifugées contre les parois périphériques de la centrifugeuse, tandis que le liquide est refoulé hors de la centrifugeuse par débordement et est envoyé dans un canal de sortie (25, 37), et une cuve collectrice (5, 41; 55) dans laquelle se rassemblent et sont conservées les matières solides centrifugées, caractérisé en ce que la cuvette collectrice (5, 41; 55) fait partie de la partie tournante de la centrifugeuse, les parois de la cuvette (27) formant les parois de la centrifugeuse, en ce que la cuvette collectrice comporte plusieurs chambres (22) qui sont disposées perpendiculairement à l'axe de symétrie de rotation et qui sont formées de cloisons (21, 42, 60) s'étendant transversalement à l'axe de symétrie de rotation et communiquant par des ouvertures (23, 62, 64) parallèles à l'axe, à la fois entre elles et avec le canal de sortie (25, 37), et en ce que la cuvette collectrice est solidaire en rotation de l'arbre d'entraînement (3, 33) du moteur (1, 32), mais peut en être séparée axialement.

2. Dispositif suivant la revendication 1, caractérisé en ce que les ouvertures (23, 62, 64) sont disposées concentriquement à un moyeu (6, 57) de la cuvette collectrice (5, 41, 55), qui peut être monté solidaire en rotation de l'arbre d'entraînement (3, 33).

3. Dispositif suivant la revendication 2, caractérisé en ce que le moyeu (6, 57) de la cuvette collectrice (5, 41, 55) porte à l'état monté cotre une butée (8) de l'arbre d'entraînement (3, 33) et est maintenu axialement, à l'aide de moyens de fixation (9), et en ce que l'extrémité (10) de l'arbre d'entraînement (3), qui est tournée vers la cuvette collectrice (5), est guidée dans un palier (11, 43) qui est disposé dans une partie du boîtier (13, 45) entourant la cuvette collectrice (5, 41).

4. Dispositif suivant la revendication 3, caractérisé en ce que la partie du boîtier (13, 45) entourant la cuvette collectrice (5, 41, 55) forme la partie inférieure du dispositif et le moteur d'entraînement (1, 32) et la partie du boîtier (1, 31) comportant le canal d'entrée et de sortie (18, 25; 36, 37) et une chambre formant répartiteur (19) forme la partie supérieure du dispositif.

5. Dispositif suivant la revendication 4, caractérisé en ce qu'à partir de la chambre formant répartiteur (19, 52), qui communique avec le canal d'entrée (18, 35), un embout tubulaire (20, 53), entourant concentriquement l'arbre d'entraînement (3, 33), s'étend jusqu'à proximité du fond de la cuvette collectrice (5, 41, 55), et en ce que les ouvertures (23, 62, 64) des chambres (22) sont si grands que le liquide peut passer sans retenue entre l'embout tubulaire (20, 53) et les cloisons (21, 42, 60).

6. Dispositif suivant la revendication 1, caractérisé en ce qu'il est prévu des moyens (28) qui détectent le niveau de remplissage de la cuvette collectrice (5, 41) et qui, lorsqu'une quantité déterminée de matière solide est atteinte, émettent un signal optique et/ou acoustique.

7. Dispositif suivant la revendication 6, caractérisé en ce que le temps de démarrage du moteur d'entraînement (1, 32) est détecté pour déterminer le degré de remplissage.

8. Dispositif suivant la revendication 7, caractérisé en ce que sur l'arbre du moteur (3, 33) et sur les parties fixes du boîtier qui lui sont opposées est prévu un dispositif à cellule photoélectrique (28) destiné à détecter le temps de démarrage du moteur d'entraînement (1, 32).

9. Dispositif suivant la revendication 1, caractérisé en ce que le moteur (32) pour la centrifugeuse est en même temps le moteur d'entraînement d'une pompe (34) intégrée à la partie supérieure (31) et refoulant le liquide dans la cuvette collectrice (41).

10. Dispositif suivant la revendication 9, caractérisé en ce que la partie supérieure (31) comporte un premier canal d'entrée (36) pour du liquide, qui communique, d'une part, d'une manière connue avec le conduit d'évacuation d'un dispositif d'aspiration et, d'autre part, avec le corps de la pompe (36), en ce que, du côté refoulement de la pompe (34), est monté un clapet anti-retour (38), en ce qu'il est prévu à la suite du clapet anti-retour (38) au moins un autre canal d'entrée (51) pour du liquide, et en ce que les deux canaux d'entrée (36, 51) débouchent dans une chambre formant répartiteur (52), à laquelle se raccorde un embout tubulaire (53) entourant concentriquement l'arbre d'entraînement (33b) de la cuvette collectrice (41), et s'étendant jusqu'à proximité du fond de la cuvette collectrice (41).

11. Dispositif suivant la revendication 1, caractérisé en ce que les cloisons (60) font partie d'une pièce rapportée (56) pouvant être introduite dans la cuvette collectrice (55) et pouvant être reliée à celle-ci de manière amovible.

12. Dispositif suivant la revendication 11, caractérisé en ce qu'il est prévu une partie de cuvette (55) sensiblement cylindrique, ayant des cloisons (60) équidistantes qui s'étendent jusqu'à son bord supérieur et dont les bords intérieurs forment des ouvertures (62, 64) de dimensions différentes.

13. Dispositif suivant la revendication 12, caractérisé en ce que les ouvertures (62, 64) sont, d'une manière continue, de plus en plus petites du fond à l'extrémité supérieure de la partie de la cuvette (55).

14. Dispositif suivant la revendication 11, caractérisé en ce que la pièce rapportée (56) comporte un couvercle (63) qui forme le bord supérieur de la partie de la cuvette (55) et qui présente une ouverture de sortie (64) plus petit que l'ouverture (62') que l'on obtiendrait en cet endroit par la diminution continue de la dimension des ouvertures (62).

15. Dispositif suivant la revendication 11, caractérisé en ce que la partie de la cuvette (55) comporte, du côté du fond et à l'extérieur, plusieurs ailettes (59) disposées en étoile par rapport à l'axe de rotation et produisant, lors de la rotation, une surpression en-dessous de la cuvette.

FIG 1

EP 0 290 745 B1

Einlauf

Auslauf

FIG 2

FIG 3

FIG 4

EP 0 290 745 B1

FIG 8

FIG 7

FIG 6

FIG 5

FIG 9

FIG 10